# EUROPEAN PATENT SPECIFICATION

(11) **EP 2 516 810 B1**
(45) Date of publication and mention of the grant of the patent: **07.02.2018**
(21) Application number: 09852482.0
(22) Date of filing: 22.12.2009
(51) Int. Cl.: F01K 21/04, F02C 7/14, F02C 1/04, F01K 23/04

(54) **ARRANGEMENT IN A GAS TURBINE PROCESS**
ANORDNUNG IN EINEM GASTURBINENVERFAHREN
AGENCEMENT DANS UN PROCÉDÉ À TURBINE À GAZ

(43) Date of publication of application: 31.10.2012
(73) Proprietor: Alander, Reijo, 35800 Mänttä (FI)
(72) Inventor: Alander, Reijo, 35800 Mänttä (FI)
(74) Representative: Helke, Kimmo Kalervo
(86) International application number: PCT/FI2009/051030
(87) International publication number: WO 2011/076973

(56) References cited:
- EP-A1- 0 519 304
- WO-A1-00/34638
- US-A- 6 148 602
- US-B1- 6 279 312
- US-B2- 6 973 772

## Description

The invention relates to an arrangement in a gas turbine process comprising:
- a compressor for pressurizing air to process gas, and
- a gas turbine for expanding the process gas to obtain shaft output,
- an electric generator for utilizing the difference of turbine and compressor shaft outputs,
   an indirect process gas heat exchanger for preheating compressed process gas with expanded exhaust gas, and
- an indirect evaporator for humidifying compressed process gas, comprising a heat transfer surface for adding water to compressed air, adapted to utilize the heat of the expanded process gas coming from the compressor, and
- a water supply arrangement for forming a water film on the compressed air side of the heat transfer surface, whereby the expanded process gas is adapted to flow on the first side of the heat transfer surfaces while the water film, attached to the surface, flows on the second side and compressed air flows on the outside of the water film for evaporating water therefrom, and
- a boiler and an indirect heat exchanger arranged thereto as a heat source for increasing the enthalpy of the compressed humid process gas before transferring it to the gas turbine,
characterized in that the indirect evaporator is adapted to cool down the expanded exhaust gas, below the dew point for evaporating water therefrom and for transferring this heat to evaporation and that the pressure level of the compressor is 2 - 8 bar.

In particular, the invention relates to a method for improving the efficiency of an indirectly heated gas turbine plant, specifically in combined power and heat production, for enhancing the heat-to-power ratio.

The use of solid fuel in a gas turbine application is difficult due to problems related to the pressurization of the combustion process and the fact that, when burning solid fuel, combustion gases contain solid particles as well as gases which soil the parts of equipment that are in contact with the combustion gas. In this process combustion takes place outside the process and thermal energy is transferred to the process via a heat exchanger.

The combustion temperature of solid fuel is in a class of 800 - 1300 °C and, since heat transfer requires a temperature difference between various spaces, then, with indirect heating, temperatures of approximately 800 - 900°C maximum are achieved economically for the temperature of gas entering the turbine. This again leads to that the process efficiency remains modest, at best at a level of 10%.

For improving the efficiency, water vapour can be added to the gas flow entering the supercharger after pressurization, which heats up and superheats in the process to such an extent that it is ideal gas and can thus be used as an addition to the process gas in the circuit. When water vapour is taken to the circuit in a pressurized state, this mass flow is available for decreasing the input power required by the supercharger, and in this way the process efficiency improves.

US 4503681 proposes a combi power plant wherein steam received from a steam turbine is mixed with the air pressurized by the supercharger. As a whole, the plant with its gasification equipment is complicated. From US 5,417,053 and US 5,271,216, combi power plants are known in which a steam ejector is used to utilize the pressure energy of the higher pressure live steam.

US 5,271,216 and US 5,417,053 describe gas turbine processes. Both of these are traditional gas turbines with internal systems using fossil fuel. Steam is generated from waste heat by dry heat transfer. They make use of an ejector which also allows slightly increasing the pressure level of compressed air by the higher pressure live steam in addition to that the ejector provides as such a remarkable additional output in the turbine. The system requires quite high a pressure in the waste heat boiler.

The gas turbine process of US 4,503,681 is equipped with external heating. Dry heat transfer is used for generating steam that flows to a combi turbine, the counter pressure steam of which is supplied to the pressure side of the compressor. A question arises here concerning the fact that the compressor pressure should be lower than the steam turbine counter pressure because otherwise the compressor would not function.

The process of Maisotsenko (US 7,007,453 and US 6,948,558) is based on humidifying completely dry ideal gas partly with the heat of the exhaust gas. The pressure level is typically very high (for example 50 bar). Then a great portion of the phase change of water in fact consists of boiling while the portion of evaporation remains modest. In the process the turbine pressure is 50 bar, which heats air about 1000°C. As the evaporation energy is taken also from the compressed air flow downstream of the supercharger as dry heat transfer, unreasonably large heat transfer surfaces are required.

Document WO 00/34638 also discloses a power generation system according to the state of the art.

The object of this invention is to provide a gas turbine arrangement that is suitable also for small and medium size plants providing a high heat-to-power ratio. The target is to achieve a heat-to-power ratio about between 25% and 33% also for small size classes, i.e. from level 100 kW upwards. The characteristic features of the invention are set forth in the appended claims.

Most advantageously, an indirect heat source is used, but the invention can also be applied at least to some extent in a gas turbine process with direct combustion.

By combining indirect evaporation and an increase in enthalpy with a steam ejector, a remarkably high heat-to-power ratio is achieved also in small plants. In the solution according to the invention it is possible to utilize the condensation energy of exhaust gas in significant amounts.

It is a completely different matter to spray water compared to supplying steam to the gas flow entering the turbine. Spray water lowers the specific enthalpy of the mass flow because the evaporation heat of water must be taken from the gas flow or from the combustion chamber using primary energy. Instead, by evaporating water with the exhaust gas of the gas turbine, a significant increase in enthalpy is obtained without primary energy consumption. The best balance is achieved when the higher pressure live steam is added or ejected to the gas flow after indirect evaporation. This provides the specific advantage that the dew point temperature of the exhaust gas increases facilitating the heat transfer in indirect evaporation. On the other hand, producing saturated live steam is relatively simple in a boiler system.

The invention is suitable for a pressure level of below 10 bar, most advantageously to a range of 2 - 8 bar (generally 1.5 - 10 bar). With higher pressures, the temperature of saturated steam increases to high values, in which case the humidification of high pressure air at 100 - 130°C is no more possible to large extents.

In an example, evaporation energy is taken from the exhaust gas at about 1 bar (abs) exiting from the turbine which contains as much as 550 g water vapour/kg of dry air. In this condition the dew point of the exhaust gas is about 80°C. Heat delivery in this process takes place when the exhaust gas dew point is 80°C > 70°C. This condensation heat warms up the water sprayed on the heat transfer pipes to about 68°C - 76°C. At 7 bar, the partial pressure of steam corresponding to the above temperatures is in a class of 0.042 bar - 0.065 bar. Evaporation takes place completely within these pressure levels because with forced convection the relative moisture of air passing the water film is practically 0. In reality, it binds an unlimited amount of moisture at 274°C, particularly in the initial part of the process where the partial pressure of steam is the lowest. Thus the partial pressure of all steam presses the water vapour to air from the film surface. It should be noted that at 7 bar the air density is 7-fold relative to the normal air pressure so that abundant water-binding air mass exists even at moderate flow speeds. Roughly speaking, with reasonable heat transfer surfaces, a condition is achieved in which one kilogramme of air can bind approximately 190 g of water vapour utilizing the energy of water vapour condensing from the exhaust gas. The cooling energy of air at 7 bar and 274°C generates approximately 88 g of water vapour per one kilogramme of air. Then air cools down adiabatically to a dew point temperature of about 120°C which, at 7 bar, corresponds approximately to 280 g of water vapour per one kilogramme of dry air.

For the extent that the temperature of compressed gas or exhaust gas exceeds the saturation temperature (e.g. 7 bar, 170°C), separate boiling can be used for generating steam, in which case it is led separately to the following heating step.

### Equipment selections

In this method, turbochargers, used for combustion motors are used for small size classes. Supercharger and turbo components are manufactured in large series. A turbogenerator is designed to work at high rotation speeds; it is provided with magnetic, oil and air bearings optimizing the assemblies specifically for each case.

The invention can be easily applied to an output range of 10 - 1000 kW, in which case the equipment would be constructed from the turbochargers of diesel motors using their impellers and blower hoods. Currently, plants with an electric output of more than 500 kW are extremely competitive and technically and economically very profitable. In plants of one megawatt, a prefabricated gas turbine, representing known and proven technology, is most advantageously used. The challenge lies in providing a channel system between the supercharger and the turbine with small losses in order to avoid a decrease in efficiency. One possibility is to extend the intermediate shaft and to create space for the channels. In case the motors are different handed on both sides, another alternative is to change the supercharger wheels to direct the flow outwards, which facilitates the creation of the channel system.

In larger size classes, generally upwards of hundreds of kilowatts, it is possible to use gas turbines that are in largescale commercial manufacture. Gas turbines are simply modified replacing the combustion chamber with an external heat source. As heat sources, heat exchangers are used, to which energy is brought from the boiler's combustion chamber and exhaust gas.

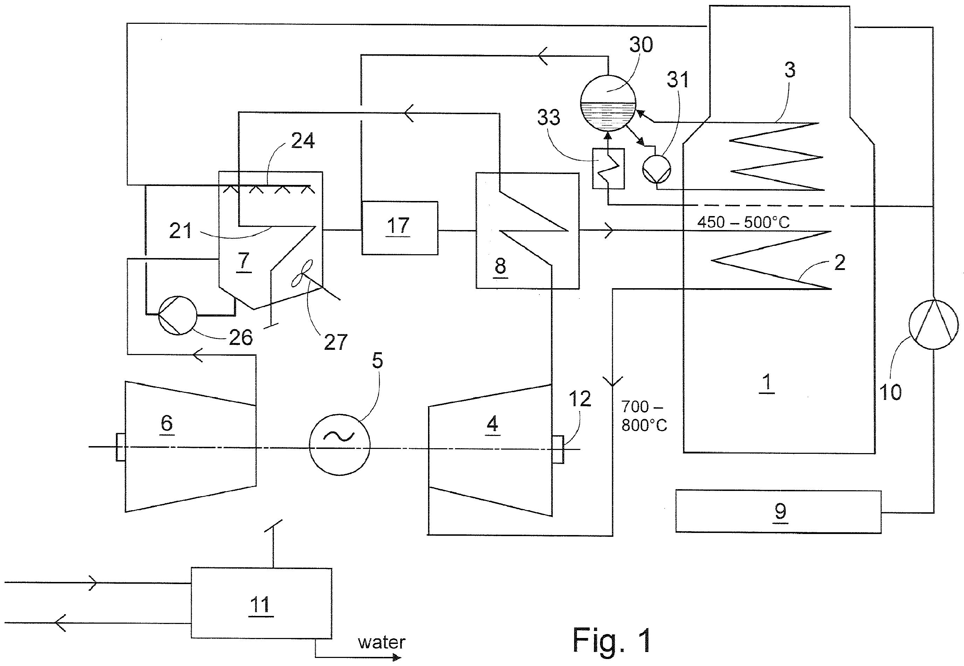

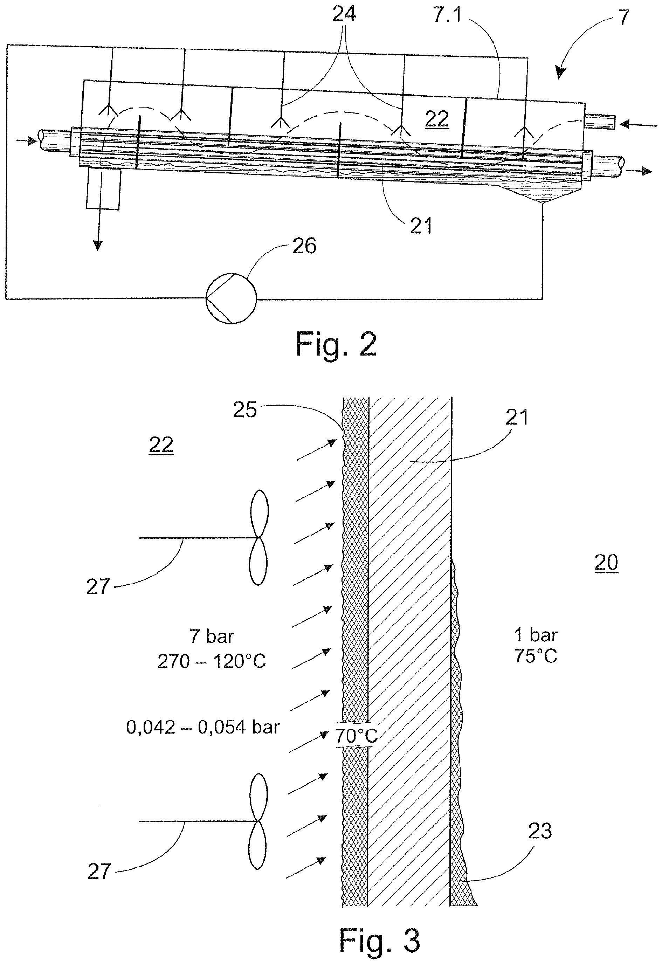

The water vapour to be added can be generated for the process using one of the following four methods:
1. High temperature combustion gas remaining after the superheater of the combustion chamber can be used for generating water vapour with a steam boiler (3), the pressure of which exceeds the pressure of the process gas after the supercharger. The steam is led to the process, to the part between the supercharger and the superheater. It can be estimated that the input power used for generating water vapour may be 1.5 to 2-fold compared to the output taken by the superheater.
   With this method, an electricity yield is obtained that is about 1.5-fold compared to a traditional gas turbine application, wherein the temperature of the gas flow arriving the turbine is 800°C and the overpressure is about 2 bar.
2. The efficiency of the process can be improved by leading the water vapour generated in the steam boiler (3), mentioned in the previous item, to the process via a thermocompressor (16), i.e. a steam ejector. Based on its pressure and kinetic energy, this steam functions as an "extractor" aspirating a warm mixture of air and water vapour from the exhaust side of the process to the pressurized area replacing thus the gas pressurized by the supercharger. This mixture of compressed air / water vapour can also be utilized to function as an extractor from the humidifier-evaporator, using an ejector arrangement, in which case it partly replaces the pressure generated by the supercharger. The process diagram of this process is shown in Figure 2. In a calculation, 0.232 kg/s of water could be added to an intake air flow of 1.148 kg/s. The supercharger pressurizes air to 2.97 bar. The values of live steam before expanding are: mass flow 1.38 kg/s, temperature 800°C, pressure 2.87 bar (abs), enthalpy 1353 kJ/kg. The supercharger takes 164 kW and the turbine gives 303 kW. 139 kW is left for the generator.
3. Steam generated in the steam boiler (3) can be used to improve the pressurization of the process in such a way that a thermocompressor (17) aspirates the air existing on the pressure side of the turbocharger thus pressurizing it and compensating in this way for the kinetic energy required by the supercharger; process diagram in Figure 1.
4. In each of the previous cases, the process can utilize the pressurized water vapour generated by the indirect evaporation/condensation heat exchanger, part No. 7 indicated in the diagram. In the heat exchanger 7 located after the supercharger, water is sprayed to the heat transfer surfaces and to compressed air whereby the water evaporates taking its energy from the air heated in the supercharger and from thermal energy coming from the heat transfer surfaces.

Hot and humid exhaust gas contains a significant amount of energy, and when the water vapour contained therein condenses, the heat transfer of the heat exchanger is efficient as a phase change occurs on both sides of the heat surface.

In this solution, in the output classes of 100 - 1000 kW, a microturbine supercharger unit is used, which is advantageously a turbocharger of heavy vehicles and ground based gas turbines, for example. The supercharger and the turbine are separated from each other and the generator and channel system including sealings are placed inbetween. A support is required in the axial direction due to the asymmetry of the axial forces. Advantageously, a magnetic bearing is used. A 14-litre machine of Scania Ab (SE) has a turbocharger that provides an electricity output of 120 - 150 kW in this application. Steam ejectors are manufactured industrially. Some of the manufacturers are Körting Hannover AG (DE) and Venturi Jet Pumps LTD (UK).

The turbochargers or ground based gas turbines and marine diesel motors are so large that the electricity output of 1000 kW can be obtained with them. For larger ones, separate gas turbines are used.

### Process advantages

At the moment, the size class ranging from a few kW to a few MW of electric output lacks a cost-efficient power production method in which solid renewable fuel is used. In this method, it is possible to make a power production plant or CHP (combined heat and power production) plant operating with solid fuel and with a relatively high heat-to-power ratio. With a heat exchanger 11, the extra heat coming from the process can be utilized for heating purposes.

In a reference plant equipped with indirect heating, the heatto-power ratio remains at 13%. By adding optimally the elements, described in the patent, that increase the amount of process gas with water vapour, it is even possible to achieve a heat-to-power ratio exceeding 30%. For equipment of this size class, such a high heat-to-power ratio is generally not possible. With traditional methods, really high investment costs are required to achieve this high heat-to-power ratio, and therefore plants of this type remain unbuilt.

Forest and other wood waste as well as burning waste is usually locally available, the transportation costs of which make them unprofitable for large power plants when the distance is sufficiently long. For this reason, these power and heat production units with an output of a few MW arranged locally in connection with district heating plants, for example, have risen to an important position in today's society. These plants are fulfilling the targets for the production of renewable energy required by the EU, for example.

The invention is described below with examples and by making reference to the enclosed drawings, in which
Figure 1 shows an arrangement for a gas turbine.
Figure 2 illustrates an indirect evaporator in detail.
Figure 3 illustrates an indirect evaporation event in detail.

### Reference numbers used in the gas turbine process diagram (common)

| | | | |
|---|---|---|---|
| 1. | Combustion chamber | | gas |
| 2. | Heating of medium gas | 9. | Condense water tank |
| 3. | Steam boiler | 10. | Water supply pump |
| 4. | Turbo turbine | 11. | District heat exchanger |
| 5. | Generator | 12. | Bearing assembly |
| 6. | Compressor | 17. | Steam supply to gas mixture |
| 7. | Evaporation-condensation heat transfer | | |
| | | 20. | Inner space of evaporator pipe |
| 8. | Preheating of precursor | | |
| 21. | Evaporating pipe | 27. | Forced convection |
| 22. | Evaporator chamber | 30. | Steam cylinder |
| 23. | Exhaust gas condense | 31. | Recirculation water pump |
| 24. | Spray nozzles | 33. | Economizer |
| 25. | Water film | | |
| 26. | Spray pump | | |

### Application example 1

Figure 1 shows a schematic view of the process wherein the live steam of the steam boiler (possible small throttling for creating slight superheating) is led directly to a compressed gas flow. A supercharger 6 pressurizes the room air to an absolute pressure of about 7 bar simultaneously heating it to about 275°C. Air is led to a heat exchanger 7 wherein air is humidified by spraying water-mist while the temperature decreases to the dew point.

In a modification, a separate evaporator or rather a boiler is provided wherein air at 275°C cools down to 180°C and generates saturated live steam in an amount of about 40 g per kg of air at a pressure of 7 bar. This is advantageously led to the following heating step, to the inlet of a preheater, for example, thus avoiding condensation of compressed air. Compressed air is then colder than in the previous example, but completely dry when arriving to the indirect evaporator, which may be thermodynamically more advantageous.

A pump 26 circulates extra water to the heat transfer surfaces of pipes 21 to avoid that any unexposed pipe surface comes in direct contact with air. Sprayed water forms a water film 25 on the surface of the pipe 21 whereby part of the water evaporates humidifying further the air. The air moistens to the extent comparable to the amount of thermal energy transferred to the space 22 to be humidified via the heat exchanger surfaces 21. Exhaust gas containing water vapour on the outlet side 20 of the heat exchanger 21 condenses to the surfaces of the exchanger as condensate 23, which indicates that the heat transfer is efficient when the phase change takes place on both surfaces of the heat exchanger (Figure 3). Forced convection is used in the indirect evaporator 7 for the water film located between air and the pipes 21. This is illustrated by the blower 27, but intensified heat transfer can also be achieved with a zigzag flow arrangement. Boiling is concerned when evaporation of water takes place at a temperature higher than that corresponding to the pressure of saturated steam (e.g. 7 bar 170°C).

The use of a microturbine supercharger unit and particularly of an almost standard aggregate in this type of application is particularly advantageous for reducing investments costs.

The process gas consisting of air and water vapour at the dew point temperature flows to the channel system wherein water vapour is added to the process with an ejector 17 which simultaneously slightly increases its pressure level. The significance of this is the highest at low compressor pressures (below 3 bar). At higher pressures, the advantage remains low and the ejector can be eliminated in which case live steam is mixed directly with the process gas coming from the indirect evaporator.

Water vapour is generated in a steam boiler 3 which heats up with the combustion gases entering from the combustion chamber in the flow direction downstream of a process gas superheater 2. The steam boiler 1 comprises a supply water container 9, a supply water pump 10, an economizer 33, and a steam cylinder 30, shown here relatively schematically. The evaporator piping is provided with a recirculation water pump 31. As such, the production of live steam including control systems is conventional. A supply water pump 10 raises the supply water pressure to a sufficient level for both the live steam production and spraying in the indirect evaporator 7.

Naturally the boiler involves other heat recovery in a known way, for example, related to district heat (not shown).

After the ejector 17, the process gas goes to a heat exchanger 8 where it heats up with the exhaust gas of a turbine 4. After this the process gas is led to a superheater 2 located in the boiler for solid fuel. There the gas heats up to a temperature as high as 800 - 900°C. From there the gas continues to the turbine 4 where it changes its energy to kinetic energy rotating the turbocharger and the generator on the same shaft. A generator 5 generates electric energy which is led to consumption points. Exhaust gas, almost at the air pressure, continues to the heat exchanger 8 where it conveys some of its heat energy to the circulation gas going to the superheater, replacing thus the heat energy that is taken from the boiler. From the heat exchanger 8 the exhaust gas goes to the indirect evaporator 7 where the exhaust gas cools down and condenses conveying some of its heat energy to the compressed gas on the other side of the heat transfer surfaces.

From the indirect evaporator 7 the exhaust gas goes to a heat exchanger 11, from the secondary side of which energy can be transferred to various heating purposes, such as district heating. More water condenses from the exhaust gas and is led back to a supply water tank 9.

Figure 2 shows a design of the indirect evaporator 7 in a more detailed construction. Here it is implemented as counterflow heat transfer but it can also be implemented as a downstream construction. The evaporator is constructed in a cylindrical pressure tank 7.1 with the pipes 21 led through it in the longitudinal direction. Exhaust gas is led through these pipes 21. Compressed air is led along a zigzag path through a pressure tank whereby it flows by forced convection. The recirculation water system for spraying is dimensioned for such an amount of water that all outer surfaces of the pipe 21 are always covered by a water film. Namely, if the surface of the pipe 21 is exposed, the heat transfer turns to the wrong direction.

Figure 3 shows a detailed view of the thermodynamic operation of the indirect evaporator. The heat transfer from the exhaust gas from within the pipe 21 in the space 20 to the process gas or air in the space 22 seems to be contrary to the second main rule of thermodynamics because the heat is transferred from a colder substance to a hotter one. The enthalpy of air in the space 22 substantially increases due to the evaporation heat of water. This is possible because the partial pressure of water vapour in the space 22 is low whereby dry air captures water molecules from the water film 25, contributed particularly by forced convection, which is represented by blowers 27. Evaporation of water cools down the water film 25 substantially more than the warmer air heats it. Thus the water film can be heated from within the pipe 21. When condensate 23 generates from the water vapour of exhaust air, it has created a significant amount of heat, which transfers to the water film 25 to facilitate evaporation. As such, evaporation can take place directly even during spraying because the momentary cooling of the spray water is compensated by the fact that the pipe 21 heats it during the following round.

A modification can be proposed for the evaporator of Figure 2 wherein exhaust gas and compressed air flow downstream. The temperature is set to decrease evenly on both sides. The spray water system can be divided into parts with different temperatures.

In a modification, a blower is used inside the pressure tank to obtain forced convection. If required, even the recirculation air blow can be divided into parts. In a thermodynamically ideal case, water or air flows with different temperatures are not mixed thus avoiding an increase in entropy. Entropy losses are permitted in selected amounts to obtain an economical construction.

In a modification, the spray water circulation is chained in such a way that once heated, the water film is guided to an increasingly warm point and finally sprayed as final humidification to air exiting from the indirect evaporator. The coldest water is sprayed to the exhaust end of exhaust gases for condensing water vapour therefrom. Allowing gradual heating may be thermodynamically easier because transferring all heat through the water film to evaporation may be technically challenging. While part of the heat of the water film should be pushed out, to district heat, for example, as a whole, a significant amount of heat can be transferred from a colder gas to a hotter gas utilizing the phase change heat.

In a modification, exhaust air coming from the district heat exchanger is led to the compressor inlet. For example, exhaust air at 60°C is saturated containing a significant amount of water. A higher inlet temperature leads to a higher compressor output but a higher enthalpy of the inlet air can compensate for it.

## Claims

1. An arrangement in a gas turbine process comprising:
- a compressor (6) for pressurizing air to process gas, and
- a gas turbine (4) for expanding the process gas to obtain shaft output,
- an electric generator (5) for utilizing the difference of turbine (4) and compressor (6) outputs,
- an indirect process gas heat exchanger (8) for preheating compressed process gas with expanded exhaust gas,
- an indirect evaporator (7) for humidifying compressed process gas, comprising a heat transfer surface (21) for adding water to compressed air, adapted to utilize the heat of the expanded process gas arriving from the compressor (6),
- a water supply arrangement configured to form a water film (25) on the compressed air side of the heat transfer surface (21), whereby the expanded process gas is adapted to flow on the first side of the heat transfer surface (21) while the water film (25), attached to the heat transfer surface (21), flows on the second side and compressed air flows on the outside of the water film (25) for evaporating water therefrom,
- a boiler and an indirect heat exchanger (2) arranged thereto as a heat source for increasing the enthalpy of the compressed humid process gas before transferring it to the gas turbine (4),
**characterized in that** the indirect evaporator (7)is adapted to cool down the expanded exhaust gas, below the dew point for evaporating water therefrom and for transferring this heat to evaporation and that the pressure level of the compressor (6) is 2 - 8 bar.

2. An arrangement in a gas turbine process according to claim 1, **characterized in that** the boiler is a steam boiler (1) for generating live steam with at least slightly higher pressure than that of a gas turbine (4) and for mixing it with compressed process gas before leading it to the gas turbine (4).

3. An arrangement in a gas turbine process according to any of claims 1 - 2, **characterized in that** the arrangement includes a system for providing forced convection in the indirect evaporator (7) between the water film (25)and compressed process gas.

4. An arrangement in a gas turbine process according to claim 3, **characterized in that** for forced convection the arrangement includes one or more recirculation air fans (27) for circulating compressed air past the water film (25).

5. An arrangement in a gas turbine process according to claim 3 or 4, **characterized in that** for forced convection the indirect evaporator (7) includes a zigzag flow path for the compressed process gas.

6. An arrangement in a gas turbine process according to any of claims 1 - 5, **characterized in that** the supercharger (6) and/or turbine (4) included in the arrangement is a standard turbocharger for heavy vehicles or ground based gas turbines.

7. An arrangement in a gas turbine process according to any of claims 1 - 6, **characterized in that** the water supply system is divided into two or more parts by circulating the main part of water in each temperature range substantially independently or successively chained.

8. An arrangement in a gas turbine process according to any of claims 1 - 7, **characterized in that** the arrangement includes a pre-evaporator for utilizing the heat of compressed process gas based on its temperature higher than that of saturated steam, and with the outlet of the pre-evaporator being connected to a point in the gas turbine process that is located before the heat source but after said indirect evaporator (7).

9. An arrangement in a gas turbine process according to claim 6, **characterized in that** once heated, the water film (25) is led to an increasingly warm point and is finally sprayed to the flow exiting at least partly as final humidification from the indirect evaporator (7) and the coldest water is sprayed to the exhaust end of exhaust gases for condensing water vapour therefrom.

## Patentansprüche

1. Anordnung in einem Gasturbinenverfahren, bestehend aus
- einem Kompressor (6) zum unter Druck setzen von Luft zu Prozessgas, und
- einer Gasturbine (4) zur Ausdehnung des Prozessgases, um eine Nutzleistung zu erreichen,
- einem Stromgenerator (5) zur Nutzung der Leistungsunterschiede zwischen Turbine (4) und Kompressor (6),
- einem indirekten Wärmetauscher (8) für Prozessgas zum Vorheizen von kompri-miertem Prozessgas mit ausgedehntem Abgas,
- einem indirekten Verdampfer (7) zur Befeuchtung komprimierten Prozessgases, wobei eine Wärmeübertragungsfläche (21) zur Hinzugabe von Wasser zur komprimierten Luft so angeordnet ist, dass die Wärme des vom Kompressor (6) kommenden komprimierten Prozessgases genutzt wird,
- einer Wasserzufuhranordnung zur Bildung eines Wasserfilms (25) auf der Seite der komprimierten Luft der Wärmeübertragungsfläche (21), wobei der Fluss des ausgedehnten Prozessgases so angeordnet ist, dass es auf die erste Seite der Wärmeübertragungsfläche (21) führt, während der auf der Wärme-übertragungsfläche haftende Wasserfilm (25) auf die zweite Seite fließt und komprimierte Luft zur Verdunstung von Wasser außerhalb des Wasserfilms dringt,
- einem Dampfkessel und einem indirekten Wärmetauscher (2), angeordnet als Wärmequelle zur Steigerung der Enthalpie des komprimierten feuchten Pro-zessgases, bevor es an die Gasturbine (4) weitergegeben wird,
**dadurch gekennzeichnet, dass** der indirekte Verdampfer (7) dazu geeignet ist, das komprimierte Prozessgas abzukühlen, also das Abgas unter den Taupunkt für das verdunstende Wasser zu bringen sowie zur Übertragung dieser Wärme auf die Verdunstung und das Druckniveau des Kompressors (6)
zwischen 2-8 bar liegt.

2. Anordnung in einem Gasturbinenverfahren gemäß dem Patentanspruch 1, **dadurch gekennzeichnet, dass** der Kessel ein Dampfkessel (1) zur Erzeugung von Frischdampf mit zumindest etwas höherem Druck als dem in einer Gasturbine (4) ist sowie zur Mischung des Dampfes mit komprimiertem Prozessgas dient, bevor es in die Gasturbine (4) geführt wird.

3. Anordnung in einem Gasturbinenverfahren gemäß einem der Patentansprüche 1 - 2, **dadurch gekennzeichnet, dass** die Anordnung ein System umfasst, um zwischen dem Wasserfilm (25) und dem komprimierten Prozessgas eine erzwun-gene Konvektion im indirekten Verdampfer (7) zu erreichen.

4. Anordnung in einem Gasturbinenverfahren gemäß dem Patentanspruch 3, **dadurch gekennzeichnet, dass** die Anordnung für die erzwungene Konvektion einen oder mehrere Umluftventilatoren (27) umfasst, um die komprimierte Luft am Wasserfilm (25) vorbei zu umlaufen.

5. Anordnung in einem Gasturbinenverfahren gemäß dem Patentanspruch 3 oder 4, **dadurch gekennzeichnet, dass** zum indirekten Verdampfer (7) für die erzwun-gene Konvektion ein Zickzack-Strömungspfad für das komprimierte Prozessgas gehört.

6. Anordnung in einem Gasturbinenverfahren gemäß einem der Patentansprüche 1 - 5, **dadurch gekennzeichnet, dass** der zur Anordnung gehörende Kompressor (6) und/oder die Turbine (4) ein Standard-Turbolader für schwere Fahrzeuge oder stationäre Gasturbinen sind.

7. Anordnung in einem Gasturbinenverfahren gemäß einem der Patentansprüche 1 - 6, **dadurch gekennzeichnet, dass** das Wasserzufuhrsystem durch Zirkulation des Hauptanteils des Wassers in zwei oder mehrere Teilen in jedem Temperaturbe-reich wesentlich selbstständig oder nacheinander verkettet geteilt ist.

8. Anordnung in einem Gasturbinenverfahren gemäß einem der Patentansprüche 1 - 7, **dadurch gekennzeichnet, dass** zur Anordnung ein Vor-Verdampfer zur Nutzung der Wärme des komprimierten Prozessgases, basierend auf seiner höheren Temperatur als der gesättigte Dampf, sowie ebenso der Ausgang des Vor-Verdampfers, der mit einem Punkt im Gasturbinenprozess verbunden ist, der vor der Wärmequelle aber hinter dem besagten indirekten Verdampfer (7) liegt, gehö-ren.

9. Anordnung in einem Gasturbinenverfahren gemäß dem Patentanspruch 6, **dadurch gekennzeichnet, dass** der beheizte Wasserfilm (25) zu einem immer wärmeren Punkt geführt wird und schließlich auf den Strömungsfluss gesprüht wird, der zumindest teilweise als endgültige Befeuchtung aus dem indirekten Verdampfers (7) heraustritt, und das kälteste Wasser wird auf das Ausgangsende der Abgase zur Kondensierung des Wasserdampfes von ihnen gesprüht.

## Revendications

1. Agencement dans un procédé à turbine à gaz comprenant :
- un compresseur (6) pour pressuriser de l'air pour le transformer en gaz de procédé, et
- une turbine à gaz (4) pour dilater le gaz de procédé pour obtenir une sortie d'arbre,
- un générateur électrique (5) pour utiliser la différence des rendements de la turbine (4) et du compresseur (6),
- un échangeur de chaleur indirect (8) du gaz de procédé pour préchauffer le gaz de procédé comprimé avec le gaz d'échappement dilaté,
- un évaporateur indirect (7) pour humidifier le gaz de procédé comprimé, comprenant une surface de transfert de chaleur (21) pour ajouter de l'eau dans l'air comprimé, adapté pour utiliser la chaleur du gaz de procédé dilaté venant du compresseur (6),
- un agencement d'alimentation en eau pour former une pellicule d'eau (25) sur le côté air comprimé de la surface de transfert de chaleur (21), par lequel moyen le gaz de procédé dilaté est disposé de sorte à écouler sur le premier côté de la surface de transfert de chaleur (21) tandis que la pellicule d'eau (25), attachée à la surface de transfert de chaleur (21), écoule sur le second côté et l'air comprimé écoule sur l'extérieur de la pellicule d'eau (25) pour en faire évaporer de l'eau,
- une chaudière et un échangeur de chaleur indirect (2) y disposés en tant que source de chaleur pour augmenter l'enthalpie du gaz de procédé comprimé humide avant de le transférer vers la turbine à gaz (4),
**caractérisé en ce que** l'évaporateur indirect (7) est disposé de sorte à refroidir le gaz d'échappement dilaté sous le point de rosée pour en faire évaporer de l'eau et pour transférer cette chaleur vers l'évaporation et que le niveau de pression du compresseur (6) est de 2 à 8 bar.

2. Agencement dans un procédé à turbine à gaz selon la revendication 1, **caractérisé en ce que** la chaudière est une chaudière à vapeur (1) pour produire de la vapeur vive à une pression qui est au moins légèrement plus élevée que celle d'une turbine à gaz (4) et pour la mélanger avec le gaz de procédé comprimé avant de la conduire dans la turbine à gaz (4).

3. Agencement dans un procédé à turbine à gaz selon l'une quelconque des revendications 1 à 2, **caractérisé en ce que** l'agencement comprend un système pour fournir une convection forcée dans l'évaporateur indirect (7) entre la pellicule d'eau (25) et le gaz de procédé comprimé.

4. Agencement dans un procédé à turbine à gaz selon la revendication 3, **caractérisé en ce que** pour la convection forcée, l'agencement comprend un ou plusieurs ventilateurs d'air recyclé (27) pour faire circuler l'air comprimé à côté de la pellicule d'eau (25).

5. Agencement dans un procédé à turbine à gaz selon la revendication 3 ou 4, **caractérisé en ce que** pour la convection forcée, l'évaporateur indirect (7) comprend un chemin d'écoulement en zigzag pour le gaz de procédé comprimé.

6. Agencement dans un procédé à turbine à gaz selon l'une quelconque des revendications 1 à 5, **caractérisé en ce que** le compresseur (6) et/ou la turbine (4) compris dans l'agencement est un turbocompresseur standard pour les véhicules lourdes ou les turbines à gaz au sol.

7. Agencement dans un procédé à turbine à gaz selon l'une quelconque des revendications 1 à 6, **caractérisé en ce que** l'agencement d'alimentation en eau est divisé en deux ou plusieurs parties en faisant circuler la majeure partie de l'eau dans chaque plage de température substantiellement indépendamment ou enchaînées successivement.

8. Agencement dans un procédé à turbine à gaz selon l'une quelconque des revendications 1 à 7, **caractérisé en ce que** l'agencement comprend un pré-évaporateur pour utiliser la chaleur du gaz de procédé comprimé vu sa température plus élevée que celle de la vapeur saturée et avec la sortie du pré-évaporateur reliée à un point dans le procédé à turbine à gaz situé avant la source de chaleur mais après ledit évaporateur indirect (7).

9. Agencement dans un procédé à turbine à gaz selon la revendication 6, **caractérisé en ce qu'**une fois chauffée, la pellicule d'eau (25) est conduite à un point de plus en plus chaud et enfin pulvérisée dans le flux sortant au moins partiellement en tant qu'humidification finale de l'évaporateur indirect (7) et l'eau la plus froide est pulvérisée dans l'extrémité d'échappement des gaz d'échappement pour en condenser la vapeur d'eau.
